Europäisches Patentamt

European Patent Office

Office européen des brevets

(19)

(11) **EP 0 457 082 B1**

(12) **EUROPÄISCHE PATENTSCHRIFT**

(45) Veröffentlichungstag und Bekanntmachung des Hinweises auf die Patenterteilung:
**12.11.1997  Patentblatt 1997/46**

(51) Int Cl.⁶: **C08L 53/00**, C08J 5/18,
B32B 27/30
// (C08L53/00, 53:00),
(C08L53/00, 51:06)

(21) Anmeldenummer: **91106772.6**

(22) Anmeldetag: **26.04.1991**

(54) **Ein- oder mehrschichtige Kunststoffolie, Kunststoffolienbahn oder daraus hergestelltes Formteil**

Mono- or multilayer plastic sheet, foil, or moulding part thereof

Feuille ou bande mono ou multicouche en matière plastique, ou pièce moulée obtenue avec celle-ci

(84) Benannte Vertragsstaaten:
**AT BE CH DE DK ES FR GB GR IT LI LU NL SE**

(30) Priorität: **16.05.1990  DE 4015748**

(43) Veröffentlichungstag der Anmeldung:
**21.11.1991  Patentblatt 1991/47**

(73) Patentinhaber: **ALKOR GMBH KUNSTSTOFFE
D-81451 München (DE)**

(72) Erfinder:
* **Fink, Roland
  W-8130 Starnberg (DE)**
* **Heitz, Heinrich, Dr.
  W-8034 Germering (DE)**
* **Mathavan, Thambirajah
  W-8000 München 50 (DE)**

(56) Entgegenhaltungen:
**EP-A- 0 179 974          DE-A- 3 927 719
US-A- 4 914 155**

* **CHEMICAL ABSTRACTS, Band 107, Nr. 18, 1987, Seite 58, Zusammenfassung Nr. 155576u, Columbus, Ohio, US; JP-A-62 127 332 (JAPAN SYNTHETIC RUBBER CO., LTD) 09-06-1987**
* **Studies in Surface Science and Catalysis, B.56(1990), ELSEVIER, Amsterdam, NL, Seite 405-423**
* **Comprehensive Polymer Science, B.1(1989), Pergamon Press Plc., Exeter, GB, Seite 13-37**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft eine ein- oder mehrschichtige Kunststoffolie, Kunststofffolienbahn oder daraus hergestelltes Formteil, die als Kunststoffanteil oder Kunststoffmischung bestimmte Gewichtsmengen mindestens eines thermoplastischen Polyolefin-Elastomeren oder -Elastomergemisches bestehend aus einem heterophasigen Polypropylen-Block-Copolymerisat mit einem bestimmten Ethylen-Propylen-Copolymerisatanteil und bestimmte Gewichtsmengen mindestens eines anderen Olefin- bzw. Polyolefin und Styrol bzw. Polystyrol enthaltenden Block-, Diblock- oder Triblock und/oder -Pfropfpolymerisates und/oder mindestens eines anderen reaktive Gruppen enthaltenden Olefin- bzw. Polyolefin und/oder Styrol bzw. Polystyrol enthaltenden Block-, Diblock- oder Triblock- und/oder -copolymerisates, das durch bestimmte Gewichtsmengen eines bestimmten Modifizierungsmittels teilweise ersetzt ist, bzw. gegebenenfalls Verarbeitungshilfs- und Zusatzmittel in mindestens einer Schicht enthält oder daraus besteht.

Polypropylenhomo- und -copolymerisate sind für bestimmte Anwendungen, z. B. für Kunststoffolien und daraus hergestellte Formteile oder Gegenstände, insbesondere in der Automobilindustrie zu steif und besitzen strukturbedingt unbefriedigende Warmverformungseigenschaften. Diese sind verursacht durch die Neigung des Polypropylens zum Spannungsfließen, d. h. starker plastischer Verformung bei gleichen oder kleineren Verformungsspannungen.

Dies führt bei Formteilen mit großen Tiefziehverhältnissen bzw. dessen großen Unterschieden zu Dünnstellen. Durch diese Eigenschaft wird das Narbbild geprägter Folien verschlechtert, weil die Narbtäler - Stellen lokal höherer Spannungen - besonders auseinander fließen. Darüberhinaus treten je nach Anwendungsgebiet andere Nachteile auf.

In dem kanadischen Patent 1 150 925 wurden daher die Preßverformungseigenschaften von Polypropylen, insbesondere das Durchhängen der Folie beim Erwärmen dadurch verbessert, daß den Polypropylen-Homo- und -Copolymerisaten 4 bis 45 Gew.-% eines Diblockpolymeren aus Styrol und hydriertem Butadien zugesetzt werden. Da das Blockpolymere unter der Scherung des Tiefziehvorganges eine erhöhte Fließfähigkeit besitzt, soll das Durchhängen der Folie beim Erwärmen vermindert und trotzdem eine gute Aufformung erreicht werden. Da diese Mischungen auf einem Polypropylen mit einem Kristallisationsgrad von 60 bis 90 % basieren und die Mischungen mit dem Styrolblockpolymerisat noch einen E-Modul größer 1.000 MPa zeigen und außerdem das Styrolblockpolymerisat selbst einen E-Modul von 150 bis 200 MPa besitzt, lassen sich aus diesen Komponenten keine flexiblen Mischungen mit einem E-Modul von 50 bis 300 herstellen.

Aus der US-A-4914155 ist eine thermoplastische Kunststoffzubereitung bekannt, die

(A) bis 60 Gew.-% eines Propylen-Ethylen-Block-Copolymerisates, erhalten durch Blockcopolymerisation von 70 bis 95 Gew.-% (bezogen auf das Gesamtgewicht des Copolymeren) von Propylen-Homopolymerisat und

(B) bis 20 Gew.-% Styrol-Homopolymerisat sowie

(C) bis 30 Gew.-% von Styrol-Ethylen-Butylen-Styrol-Blockcopolymerisat oder Styrol-Ethylen-Propylen-Blockcopolymerisat

enthält.

Modifiziermittel werden gemäß US-A-4914155 nicht mitverwendet.

Die Kunststoffmischung und die daraus hergestellten Formteile gemäß US-A-4914155 zeichnen sich durch hohe Stoßfestigkeit und hohe Steifigkeit innerhalb eines breiten Temperaturbereiches aus. Werden jedoch Folien aus der Kunststoffmischung hergestellt, so sind diese Folien zu steif und die daraus hergestellten Formteile für die Innenverkleidung von Kraftfahrzeugteilen nicht geeignet. Die aus der Kunststoffmischung hergestellten Folien sind darüberhinaus zur Verarbeitung im Tiefziehverfahren nicht oder schlecht geeignet.

In der EP-A-0179974 ist eine Kunststoffmischung zur Herstellung tiefgezogener Folien für Armaturenbretter von Kraftfahrzeugen beschrieben, die aus 25 bis 35 Gew.-% Ethylen-Propylen-Dien-Terpolymer (EPDM), 29 bis 45 Gew.-% Polyolefin, 5 bis 19 Gew.-% Polyphenylenoxyd und 5 bis 12 Gew.-% Styrol-Ethylen-Butylen-Styrol-Copolymer bestehen. Die Anforderungen an die Kraftfahrzeugfolien sind jedoch weiter gestiegen, so daß u. a. die Tiefziehfähigkeit, Flexibilität und Griffigkeit verbesserungsbedürftig sind.

Im europäischen Patent 0 168 203 sind Mischungen aus Styrol-Ethylen-, Butylen-Styrol-Blockpolymern, Polypropylen-Homo- und -Copolymeren, Ethylen-Propylen-Kautschuk und Prozeßölen für Kraftfahrzeug-Karosserieteile angegeben. Diese Mischungen sind für Kraftfahrzeuginnenteile wegen des starken Fog-Effektes nicht geeignet. Außerdem sind die Warmverformungseigenschaften dieser Mischungen nicht zufriedenstellend.

Ziel und Aufgabe der vorliegenden Erfindung ist es, die vorgenannten Nachteile zu vermeiden und eine ein- oder mehrschichtige Kunststoffolie mit verbesserten Eigenschaften, insbesondere mit verbesserter Tiefziehfähigkeit zu finden. Die Folie sollte zur Herstellung thermogeformter, flexibler Formteile mit geprägter Oberfläche besonders geeignet sein, vorzugsweise für Kraftfahrzeugteile und Kraftfahrzeugverkleidungen. Die Folie sollte flexibel sein und auch die Spezifikationsanforderungen der Automobilindustrie, z. B. hinsichtlich Alterungs- und Fog-Eigenschaften erfüllen.

Ziel dieser Erfindung ist es weiterhin, geprägte und ungeprägte Folien mit einem 2 % Zug-E-Modul zwischen 30 bis 400 MPa und einer Shore-D-Härte von 30 bis 60 herzustellen, die sich in einem Temperaturbereich von 150 bis 170 °C zu Teilen mit relativ gleichmäßiger Wanddickenverteilung warmverformen lassen.

Erfindungsgemäß wurde festgestellt, daß diesen Zielen und Aufgaben eine ein- oder mehrschichtige Kunststofffolie, Kunststofffolienbahn oder daraus hergestelltes Formteil (oder ein Gegenstand) gerecht wird, die bzw. das als Kunststoffanteil oder Kunststoffmischung (a) 55 bis 95 Gew.-Teile mindestens eines thermoplastischen Polyolefin-Elastomeren oder -Elastomergemisches und (b) 45 bis 5 Gew.-Teile mindestens eines anderen Olefin- bzw. Polyolefin und Styrol bzw. Polystyrol enthaltenden Block-, Diblock- oder Triblock- und/oder -Pfropfpolymerisates enthält. Gemäß der Erfindung enthält das thermoplastische Polyolefin-Elastomere oder -Elastomergemisch (a) mindestens ein heterophasiges Ethylen- Polypropylen-Block-Copolymerisat, mit einem Ethylen-Propylen-Copolymerisatanteil von 15 bis 50 Gew.-% (bezogen auf 100 Gew.-Teile des Ethylen-Propylen-Blockpolymerisates) und 44 bis 1 Gew.-Teile des Bestandteiles (b) durch die gleiche Gewichtsmenge eines Modifizierungsmittels (c) auf der Basis eines Propylen-Maleinsäureanhydrid-Misch- oder -Pfropfpolymerisates, eines Propylen-Acrylsäure-Misch- oder -Pfropfpolymerisates, eines niedrigdichten Polyethylens, eines Ethylen-Vinylacetat-Copolymerisates, eines Ethylen-Acrylsäure- bzw. Methacrylsäure-Copolymerisates, eines Ethylen-Acrylester-Copolymerisates, eines Ethylen-Glycidil-Methacrylat-Copolymerisates, eines olefinischen Ionomeren, eines Polyurethans, eines Polycaprolactons, eines Polyesterethers und/oder eines Polyetheramids ersetzt.

Das thermoplastische Polyolefin-Elastomere oder -Elastomergemisch (a) besteht aus mindestens einem heterophasigen Ethylen-Propylen-Block-Copolymerisat, mit einem Ethylen-Propylen-Copolymerisatanteil von 15 bis 50 Gew.-%, vorzugsweise 20 bis 45 Gew.-% (bezogen auf 100 Gew.-Teile des Ethylen-Propylen-Blockpolymerisates), wobei der Ethylenanteil des Copolymerisates 20 bis 90 Gew.-% und der Schmelzindex (Mfi 230/2,16) 0,2 bis 5 gr/10 min. beträgt.

Nach einer bevorzugten Ausführungsform der Erfindung enthält die Kunststoffolie, Kunststofffolienbahn oder das daraus hergestellte Formteil mindestens eine Schicht oder Folie oder besteht daraus, die als Kunststoffanteil oder Kunststoffmischung (a) vorzugsweise 65 bis 90 Gew.-Teile mindestens eines thermoplastischen Polyolefin-Elastomeren oder -Elastomergemisches bestehend aus einem heterophasigen Ethylen-Polypropylen-Block-Copolymerisat mit einem Ethylen-Propylen-Copolymerisatanteil von 15 bis 50 Gew.-% (bezogen auf 100 Gew.-Teile des Ethylen-Propylen-Block-Copolymerisates) und (b) vorzugsweise 35 bis 10 Gew.-Teile mindestens eines anderen Olefin bzw. Polyolefin und Styrol bzw. Polystyrol enthaltenden Block-, Diblock- oder Triblock- und/oder -Copolymerisates und/oder mindestens eines anderen reaktive Gruppen enthaltenden Olefin bzw. Polyolefin und/oder Styrol bzw. Polystyrol enthaltenden Block-, Diblock- oder Triblock- und/oder Copolymerisat und Verarbeitungshilfs- oder Modifizierungsmittel und gegebenenfalls Zusatzmittel.

Die Kunststoffolie, die Kunststofffolienbahn, das daraus hergestellte Formteil oder die Schicht einer Verbundfolie enthält als Kunststoffanteil oder Kunststoffmischung die Bestandteile (a) und (b) oder besteht daraus und weist eine Shore D-Härte von 30 bis 60, vorzugsweise 35 bis 55, und einen 2 %-Zug-E-Modul von 30 bis 400 MPa, vorzugsweise 50 bis 300 MPa, auf.

Nach einer bevorzugten Ausführungsform ist mindestens auf einer Fläche der die Bestandteile (a) und (b) enthaltende Kunststoffolie, Kunststofffolienbahn, des daraus hergestellten Formteiles oder einer Schicht einer Verbundfolie unmittelbar oder über eine Zwischenschicht, Primerschicht oder Druckschicht eine Lackschicht, eine transparente Oberflächenschicht oder eine transparente Oberflächenfolie mit einer Schichtdicke von 0,2 bis 30 μm angeordnet.

Nach einer weiteren bevorzugten Ausführungsform enthält das heterophasige Polypropylenblock-Copolymerisat oder -Polymergemisch (a) keine am Kunststoff gebundenen reaktive Gruppen oder einen Anteil an reaktiven Gruppen von weniger als 0,5 Gew.-%, vorzugsweise weniger als 0,4 Gew.-% (bezogen auf 100 Gewichtsteile (a)).

Nach einer anderen bevorzugten Ausführungsform sind (c) 44 bis 1 Gew.-Teile, vorzugsweise 43 bis 3 Gew.-Teile des Bestandteiles (b) durch die gleiche Gewichtsmenge eines Modifizierungsmittels auf der Basis eines Propylenmaleinsäureanhydrid-Misch- oder -Pfropfpolymerisates, eines Propylenacrylsäure-Misch- oder -Pfropfpolymerisates, eines niedrigdichten Polyethylens, eines Ethylenvinylacetat-Copolymerisates, eines Ethylen-Acrylsäure- bzw. -Methacrylsäure-Copolymerisates, eines Ethylenacrylester-Copolymerisates, eines Ethylen-Glycidilmethacrylat-Copolymerisates, eines olefinischen ionomeren, eines Polyurethans, eines Polycaprolactons, eines Polyesterethers und/oder eines Polyetheramids ersetzt.

Das Styrol enthaltende Block-, Diblock- oder Triblockpolymerisat weist vorzugsweise einen Styrol-Gehalt von mehr als 15 bis 55 Gew.-%, vorzugsweise 18 bis 30 Gew.-% (bezogen auf 100 Gew.-Teile (b)), auf und/oder der olefinische Block besteht aus Ethylen-Butylen und/oder Ethylen-Propylen oder enthält dieses im Gemisch und das Styrol-Blockpolymere enthält 0,5 bis 5 Gew.-%, vorzugsweise 1 bis 3 Gew.-%, reaktive Gruppen.

Die Mischung aus den Bestandteilen (a) und (b) oder (a), (b) und (c) (berechnet auf 100 Gewichtsteile (a) und (b) oder (a), (b) und (c)) enthält vorzugsweise zusätzlich (d) 0,01 bis 50 Gew.-Teile, vorzugsweise 0,1 bis 25 Gew.-Teile, mindestens eines Füllstoffes. Dieser ist an das Polymer gekoppelt. Weiterhin enthält diese Mischung 25 bis 0,01 Gew.-Teile vorzugsweise 20 bis 1 Gew.-Teile, eines Verarbeitungshilfs- und/oder Zusatzstoffes.

Nach einer bevorzugten Ausführungsform enthält die Mischung aus den Bestandteilen (a) und (b) oder (a), (b) und (c) (berechnet auf 100 Gew.-Teile (a) und (b) oder (a), (b) und (c)) zusätzlich (d) 0,01 bis 50 Gew.-Teile, vorzugsweise 0,1 bis 25 Gew.-Teile mindestens eines anorganischen Füllstoffes, vorzugsweise ausgewählt aus der Gruppe der Metalloxide, Metallcarbonate, Metalldioxide, Metallhydrate, Metallhydroxide, Hydrotalcite und/oder Silicate, Metallsulfate und vorzugsweise jedoch Calciumcarbonat, Zinkoxid, Magnesiumhydroxid, Aluminiumtrihydrat oder Siliciumdioxid, Talkum, Glimmer oder Wollastonit, (e) 0,01 bis 5 Gew.-Teile, vorzugsweise 0,1 bis 3 Gew.-Teile, mindestens eines Stabilisators, Antioxidantes und/oder UV-Absorbers, (f) 0,01 bis 5 Gew.-Teile, vorzugsweise 0,1 bis 3 Gew.-Teile, mindestens eines Farbstoffes und/oder Farbpigmentes, (g) 0 bis 3 Gew.-Teile, vorzugsweise 0,01 bis 2 Gew.-Teile, mindestens eines Gleitmittels und/oder Antistatikums, (h) 0 bis 30 Gew.-Teile, vorzugsweise 1 bis 20 Gew.-Teile, mindestens eines Flammschutzmittels, (i) 0 bis 12 Gew.-Teile, vorzugsweise 0,1 bis 10 Gew.-Teile, mindestens eines chemischen und/oder physikalischen Treibmittels oder die Mischung besteht daraus.

Der Bestandteil (a) der Kunststoffmischung (bezogen auf 100 Gewichtsteile (a)) bis zu 80 Gew.-%, vorzugsweise bis zu 35 Gew.-%, ist nach einer bevorzugten Ausführungsform durch ein Ethylen-Propylen-Random oder Block-Copolymerisat mit einem Ethylengehalt von 2 bis 10 Gew.-%, vorzugsweise 2,5 bis 8 Gew.-%, ersetzt.

Die Lackschicht weist eine mittlere Schichtdicke von 0,5 bis 5,0 μm auf.

Die Mischung der Bestandteile (a), (b) oder (a), (b), (c) weist eine Vicat-Erweichungstemperatur (Vicat 1 kg gemessen nach ISO 306) von mehr als 45, vorzugsweise mehr als 50, und/oder die Verformungstemperatur der Mischung der eingesetzten Bestandteile liegt zwischen 120 und 190 °C, vorzugsweise zwischen 130 und 180 °C.

Bevorzugt ist die Wanddickenverteilung, definiert als Variationskoeffizient der Wanddicke, der Mischung aus den Bestandteilen (a), (b) und (c) um mehr als 15 % besser als von Bestandteil (a) alleine.

Die vorliegende Erfindung betrifft weiterhin ein Verfahren zur Herstellung von Formteilen für Flugzeuge, Kraftfahrzeuge oder Kraftfahrzeuginnenverkleidungen unter Mitverwendung ein-oder mehrschichtiger Kunststoffolien, enthaltend Polyolefine oder Polyolefinmischungen sowie gegebenenfalls Verarbeitungshilfs- und Zusatzmittel in mindestens einer Schicht, dadurch gekennzeichnet, daß als Kunststoffolien oder Kunststoffolienbahnen solche zur Verformung eingesetzt werden, die mindestens eine Schicht oder Folie enthalten oder daraus bestehen, die als Kunststoffanteil oder Kunststoffmischung (a) 55 bis 95 Gew.-Teile, vorzugsweise 65 bis 90 Gew.-Teile, mindesens eines thermoplastischen Polyolefin-Elastomeren oder -Elastomergemisches bestehend aus mindestens einem thermoplastischen Polyolefin-Elastomeren oder -Elastomergemisches bestehend aus einem heterophasigen Ethylen-Polypropylen-Block-Copolymerisat mit einem Ethylen-Propylen-Copolymerisatanteil von 15 bis 50 Gew.-% (bezogen auf 100 Gew.-Teile des Ethylen-Propylen-Block-Copolymerisates) und (b) 45 bis 5 Gew.-Teile, vorzugsweise 35 bis 10 Gew.-Teile, mindestens eines anderen Olefin- bzw. Polyolefin und Styrol bzw. Polystyrol enthaltenden Block-, Diblock oder Triblock- und/oder -Pfropfpolymerisates und/oder mindestens eines anderen reaktive Gruppen enthaltenden Olefins bzw. Polyolefins und/oder Styrols bzw. Polystyrols enthaltenden Block-, Diblock- oder Triblock- und/oder -Copolymerisates enthält oder daraus besteht. Diese Kunststoffolien oder Kunststoffolienbahnen werden auf eine Temperatur innerhalb des thermoplastischen Bereiches, des Fließbereiches oder des Schmelzpunktes oder Schmelzbereiches oder auf eine Temperatur über 100 °C, zumindest auf einer Flächenseite aufgeheizt und unter Mitverwendung eines Druckunterschiedes thermoverformt oder tiefgezogen.

Die Erfindung betrifft weiterhin die Verwendung von ein- oder mehrschichtigen Kunststofffolien oder Kunststoffolienbahnen enthaltend Polyolefine oder Polyolefinmischungen sowie gegebenenfalls Verarbeitungshilfs- und Zusatzmittel in mindestens einer Schicht, dadurch gekennzeichnet, daß die Kunststoffolien oder Kunststoffolienbahnen eine Schicht oder Folie enthalten oder daraus bestehen, die als Kunststoffanteil oder Kunststoffmischung (a) 55 bis 95 Gew.-Teile, vorzugsweise 65 bis 90 Gew.-Teile, mindestens eines thermoplastischen Polyolefin-Elastomeren oder -Elastomergemisches bestehend aus einem heterophasigen Ethylen-Polypropylen-Block-Copolymerisat mit einem Ethylen-Propylen-Copolymerisatanteil von 15 bis 50 Gew.-% (bezogen auf 100 Gew.-Teile des Ethylen-Propylen-Block-Copolymerisates) und (b) 45 bis 5 Gew.-Teile, vorzugsweise 35 bis 10 Gew.-Teile, mindestens eines anderen Olefin bzw. Polyolefin und Styrol bzw. Polystyrol enthaltenden Block-, Diblock- oder Triblock- und/oder -Pfropfpolymerisates und/oder mindestens eines anderen reaktive Gruppen enthaltenden Olefin- bzw. Polyolefin und/oder Styrol bzw. Polystyrol enthaltenden Block-, Diblock- oder Triblock- und/oder -Pfropfpolymerisates enthält oder daraus besteht zur Herstellung tiefgezogener Formteile oder Gegenstände für Flugzeuge und Kraftfahrzeuge, für Kraftfahrzeuginnenverkleidungen oder -verkleidungsteile, vorzugsweise Schalttafeln oder Armaturenbretter, Säulen, Kraftfahrzeugseitenverkleidungen oder Kraftfahrzeugtürverkleidungen oder Kraftfahrzeugablagen.

**Beispiele**

**A) Eigenschaften der eingesetzten Rohstoffe**

1. Heterophasiges Polypropylen Blockpolymer

| Dichte | g/cm$^3$ | 0,89 |
|---|---|---|
| Schmelzindex (230/2,16) | g/10 min | 0,8 |
| Kristallinität | % | 35 |
| Ethylen-Propylencopolymerisatanteil | Gew. -% | 40 |
| Zugfestigkeit | MPa | 11 |
| Bruchdehnung | % | 500 |
| 2 % Zug-E-Modul | MPa | 100 |

2. Maleinsäureanhydrid funktionalisiertes Blockpolymerisat mit Polystyrol Endblöcken und Ethylen/Butylen Mittelblock

| Dichte | g/cm$^3$ | 0,91 |
|---|---|---|
| Polystyrolgehalt | Gew.-% | 28 |
| Maleinsäureanhydridgehalt | Gew.-% | 2 |
| Zugfestigkeit | MPa | 35 |
| Bruchdehnung | % | 500 |
| 2 % Zug-E-Modul | MPa | 180 |

3. Diblockpolymerisat mit Polystyrol und Ethylen/Butylenblock

| Dichte | g/cm$^3$ | 0,91 |
|---|---|---|
| Polystyrolgehlat | Gew.-% | 35 |
| Zugfestigkeit | MPa | 22 |
| Bruchdehnung | % | 450 |

4. LLD-PE

| Dichte | g/cm$^3$ | 0,917 |
|---|---|---|
| Schmelzindex (190/2,16) | g/10 min | 2,3 |
| Zugfestigkeit | MPa | 30 |
| Bruchdehnung | % | 900 |
| 2 % Zug-E-Modul | MPa | 250 |

5. Polyolefinionomer (Ionomer)

| Dichte | g/cm$^3$ | 0,95 |
|---|---|---|
| Schmelzindex (190/2,16) | g/10 min | 1,5 |
| Methacrylsäuregehalt | Gew.-% | 10 |
| Neutralisierung | % | 70 |
| Zugfestigkeit | MPa | 28 |
| Bruchdehnung | % | 400 |
| 2 % Zug-E-Modul | MPa | 200 |

6. Thermoplastisches Polyetherurethan

| Dichte | g/cm$^3$ | 1,12 |
|---|---|---|
| Schmelzindex (190/2,16) | g/10 min | 30 |
| Zugfestigkeit | MPa | 50 |
| Bruchdehnung | % | 550 |

7. Ethylen Propylenblockpolymer

| Dichte | g/cm$^3$ | 0,9 |
|---|---|---|
| Schmelzindex (190/2,16) | g/10 min | 0,85 |
| Kristallinität | % | 65 |
| Ethylenanteil | Gew.-% | 7 |
| Zugfestigkeit | MPa | 24 |
| Bruchdehnung | % | 250 |

**B) Herstellbedingungen der Prüfkörper**

Die Folien mit einer Dicke von 0,3 mm wurden aus den Mischungen der Komponenten auf einer Einschnecken-Extrusionsanlage mit Breitschlitzdüse bei Massetemperaturen von 220 bis 230 °C hergestellt.

**C) Prüfbedingungen**

Zugprüfung nach DIN bei 100 mm/min Abzugsgeschwindigkeit. Verformungsprüfung mit beschriebener Verformungsvorrichtung bei Temperaturen von 150 °C (160 °C) [170 °C] und einer Streckgeschwindigkeit von 1000 mm/min.

**E) Ergebnisse**

Beispiel 1:

Mischungen aus heterophasigem Polypropylen Blockpolymer (1) mit dem funktionalisierten Styrol-Triblockpolymer (2)

| Mischungsverhältnis 1/2 | | 100/0 | 80/20 |
|---|---|---|---|
| Zugfestigkeit | MPa | 16,5 | 19,9 |
| Bruchdehnung | % | 1010 | 1055 |
| 2 % Zug-E-Modul | MPa | 103 | 82 |
| Wanddicken-Variationskoeffizient 150 °C | % | 70 | 55 |
| Vicat A / 50 | °C | | |

Beispiel 2

Mischungen aus dem heterophasigem Polypropylen Blockpolymer (1) mit dem Styrol Diblockpolymeren (3) und dem Polypropylen Blockpolymeren (7)

| Mischungsverhältnis 1/3/7 | | 7/1,5/1,5 |
|---|---|---|
| Zugfestigkeit | MPa | 18,7 |
| Bruchdehnung | % | 1008 |
| 2 % Zug-E-Modul | MPa | 91 |
| Wanddicken-Variationskoeffizient 150 °C | % | 30 |
| Vicat A / 50 | °C | |

Beispiel 3

Mischungen aus dem heterophasigen Polypropylen Block-Copolymer (1), dem funktionalisierten Blockpolymerisat mit Polystyrol Endblöcken und Ethylen/Butylen Mittelblock (2) und dem Polyolefinionomeren (5)

| Mischungsverhältnis 1/2/5 | | 7/2/1 |
|---|---|---|
| Zugfestigkeit | MPa | 17,3 |
| Bruchdehnung | % | 907 |
| 2 % Zug-E-Modul | MPa | 84 |
| Wanddicken-Variationskoeffizient 150 °C | % | 44 |

Beispiel 4

Mischungen aus dem heterophasigen Polypropylen Block-Copolymer (1), dem funktionalisierten Blockpolymerisat mit Polystyrol Endblöcken und Ethylen/Butylen Mittelblock (2) und dem thermoplastischen Polyetherurethan (6)

| Mischungsverhältnis 1/2/6 | | 7/2/1 |
|---|---|---|
| Zugfestigkeit | MPa | 18 |
| Bruchdehnung | % | 918 |
| 2 % Zug-E-Modul | MPa | 63 |
| Wanddicken-Variationskoeffizient 150 °C | % | 36 |

Beispiel 5

Mischungen aus dem heterophasigen Polypropylen Block-Copolymer (1), dem funktionalisierten Blockpolymerisat mit Polystyrol Endblöcken und Ethylen/Butylen Mittelblock (2) und dem LLD-PE (4)

| Mischungsverhältnis 1/2/4 | | 7/1/2 |
|---|---|---|
| Zugfestigkeit | MPa | 23 |
| Bruchdehnung | % | 1030 |
| 2 % Zug-E-Modul | MPa | 79 |
| Wanddicken-Variationskoeffizient 150 °C | % | 37 |
| (160 °C) | | 30 |
| [170 °C] | | 29 |

Die Ergebnisse der Tiefziehprüfung zeigen, daß die Wanddickenverteilung in einem Bereich von 10 °C unterhalb bis 10 °C oberhalb des Schmelzpunktes des heterophasigen Polypropylen-Block-Copolymeren praktisch gleich ist.

Verfahren zur Ermittlung der Wanddickenverteilung von Vakuum-tiefgezogenen Kunststoffolienbahnen in Abhängigkeit von der Temperatur

Notwendige Prüfapparaturen:

I. Eine konventionelle Vakuum-Tiefziehmaschine

II. Eine Einspannvorrichtung (1) für die Aufnahme von kreisrunden Prüfkörpern mit einem Durchmesser von 220 mm

III. Einen Stempel (2) mit einem Durchmesser von 100 mm und Vakuumanschluß (6) gemäß Zeichnung

IV Dickenmeßgerät mit Digitalanzeige in 1/1000 mm

Prüfkörper:

Die Prüfkörper werden hergestellt, indem die Folienbahnen in die Einspannvorrichtung eingeklemmt werden und mittels Infrarot-Strahlern auf Prüftemperaturen aufgeheizt werden.

Nach dem Zurückfahren des Heizschirmes bewegt sich der Formtisch (3) mit dem Stempel mit einer Verformungsgeschwindigkeit von ca. 1000 mm/min in die Folienbahn hinein. Beim Berühren der Folienbahn wird die Vakuumpumpe eingeschaltet, so daß nun eine freie kreisrunde Fläche von 60 mm Breite in der eingestellten Höhe verformt wird.

Durch Variieren der Stempelhöhe können Tiefziehgrade (Verhältnis Kegelmantel/Kreisringfläche) von 1 : 1 bis 1 : 3 erreicht werden.

Der so erhaltene Prüfkörper wird sofort auf Raumtemperatur abgekühlt und anschließend der Einspannvorrichtung entnommen.

An der Kegelstumpffläche (5) werden an festgelegten Stellen (7) je 6 Dickenmessungen in beiden axialen Richtungen durchgeführt.

In den Beispielen wurden bei einem Tiefziehverhältnis von 1 : 3 die Wanddicken alle 60° des Kreisumfanges in einer Höhe - gemessen von der Grundfläche - von 16, 56, und 96 mm gemessen (Gesamthöhe 100 mm).

Aus den 12 Meßwerten wird der Variationskoeffizient V wie folgt errechnet:

n = Anzahl der Messungen

$X_i$ = i-ter Meßwert

$\bar{x}$ = Mittelwert des n-Meßwertes

$$x = \frac{1}{n} \sum_{i=1}^{i=n} x_i$$

$$s = \sqrt{\frac{1}{n-1} \sum_{i=1}^{i=n} (x_i - \bar{x})^2}$$

$$v = \frac{s}{x} \times 100\%$$

**Patentansprüche**

1. Ein- oder mehrschichtige Kunststoffolie, Kunststoffolienbahn oder daraus hergestelltes Formteil, die bzw. das als Kunststoffanteil oder Kunststoffmischung
   (a) 55 bis 95 Gew.-Teile
   mindestens eines thermoplastischen Polyolefin-Elastomeren oder -Elastomergemisches und
   (b) 45 bis 5 Gew.-Teile
   mindestens eines anderen Olefin- bzw. Polyolefin und Styrol bzw. Polystyrol enthaltenden Block-, Diblock- oder Triblock- und/oder -Pfropfpolymerisates enthält, dadurch gekennzeichnet, daß das thermoplastische Polyolefin-Elastomere oder -Elastomergemisch (a) mindestens ein heterophasiges Ethylen-Polypropylen-Block-Copolymerisat, mit einem Ethylen-Propylen-Copolymerisatanteil von
   15 bis 50 Gew.-%
   (bezogen auf 100 Gew.-Teile des Ethylen-Propylen-Blockpolymerisates) enthält und daß 44 bis 1 Gew.-Teile des Bestandteiles (b) durch die gleiche Gewichtsmenge eines Modifizierungsmittels (c) auf der Basis

   eines Propylen-Maleinsäureanhydrid-Misch- oder -Pfropfpolymerisates,
   eines Propylen-Acrylsäure-Misch- oder -Pfropfpolymerisates,
   eines Ethylen-Vinylacetat-Copolymerisates,
   eines Ethylen-Acrylsäure- bzw. Methacrylsäure-Copolymerisates,
   eines Ethylen-Acrylester-Copolymerisates,
   eines Ethylen-Glycidil-Methacrylat-Copolymerisates,
   eines olefinischen Ionomeren,
   eines Polyurethanes,
   eines Polycaprolacetons,
   eines Polyesterethers und/oder
   eines Polyetheramids

   ersetzt sind.

2. Kunststoffolie, Kunststoffolienbahn oder daraus hergestellte Formteile nach Anspruch 1, dadurch gekennzeichnet, daß das thermoplastische Polyolefin-Elastomere oder -Elastomergemisch (a) aus mindestens einem heterophasigen Ethylen-Propylen-Block-Copolymerisat, mit einem Ethylen-Propylen-Copolymerisatanteil von

   15 bis 50 Gew.-%, vorzugsweise
   20 bis 45 Gew.-%,

(bezogen auf 100 Gew.-Teile des Ethylen-Propylen-Blockpolymerisates) besteht, wobei der Ethylenanteil des Copolymerisates 20 bis 90 Gew.-% und der Schmelzindex (MFI 230/2,16) 0,2 bis 5 gr/10 min beträgt.

3. Kunststoffolie, Kunststoffolienbahn oder daraus hergestellte Formteile nach Ansprüchen 1 und 2, dadurch gekennzeichnet, daß die Kunststoffolie, die Kunststoffolienbahn, das daraus hergestellte Formteil oder die Schicht einer Verbundfolie als Kunststoffanteil oder Kunststoffmischung die Bestandteile (a) und (b) enthält und eine Shore D-Härte von 30 bis 60, vorzugsweise 35 bis 55, und einen 2 % Zug-E-Modul von

30 bis 400 MPa, vorzugsweise
50 bis 300 MPa,

aufweist.

4. Kunststoffolie, Kunststoffolienbahn oder daraus hergestellte Formteile nach einem oder mehreren der Ansprüche 1 bis 3, dadurch gekennzeichnet, daß mindestens auf einer Fläche der die Bestandteile (a) und (b) enthaltenden Kunststoffolie, Kunststoffolienbahn, des daraus hergestellten Formteiles oder einer Schicht einer Verbundfolie unmittelbar oder über eine Zwischenschicht, Primerschicht oder Druckschicht eine Lackschicht, eine transparente Oberflächenschicht oder eine transparente Oberflächenfolie mit einer Schichtdicke von 0,2 bis 30 μm angeordnet ist.

5. Kunststoffolie, Kunststoffolienbahn oder daraus hergestellte Formteile nach einem oder mehreren der Ansprüche 1 bis 4, dadurch gekennzeichnet, daß das heterophasige Polyolefin-Elastomere oder -Polymergemisch (a) keine am Kunststoff gebundene reaktiven Gruppen oder einen Anteil an reaktiven Gruppen von weniger als 0,5 Gew.-%, vorzugsweise weniger als 0,4 Gew.-%, (bezogen auf 100 Gew.-Teile (a)) enthält.

6. Kunststoffolie, Kunststoffolienbahn oder daraus hergestellte Formteile nach einem oder mehreren der Ansprüche 1 bis 5, dadurch gekennzeichnet, daß
43 bis 3 Gew.-Teile
des Bestandteiles (b) durch die gleiche Gewichtsmenge eines Modifizierungsmittels (c) auf der Basis

eines Propylen-Maleinsäureanhydrid-Misch- oder -Pfropfpolymerisates,
eines Propylen-Acrylsäure-Misch- oder -Pfropfpolymerisates,
eines Ethylen-Vinylacetat-Copolymerisates,
eines Ethylen-Acrylsäure- bzw. Methacrylsäure-Copolymerisates,
eines Ethylen-Acrylester-Copolymerisates,
eines Ethylen-Glycidil-Methacrylat-Copolymerisates,
eines olefinischen Ionomeren,
eines Polyurethanes,
eines Polycaprolacetons,
eines Polyesterethers und/oder
eines Polyetheramids

ersetzt sind.

7. Kunststoffolie, Kunststoffolienbahn oder daraus hergestellte Formteile nach einem oder mehreren der Ansprüche 1 bis 6, dadurch gekennzeichnet, daß der Bestandteil (b) reaktive Gruppen enthält.

8. Kunststoffolie, Kunststoffolienbahn oder daraus hergestellte Formteile nach einem oder mehreren der Ansprüche 1 bis 7, dadurch gekennzeichnet, daß die Mischung aus den Bestandteilen (a), (b) und (c) (berechnet auf 100 Gew.-Teile (a) und (b) oder (a), (b) und (c) zusätzlich
(d)   0,01 bis 50 Gew.-Teile, vorzugsweise
0,1 bis 25 Gew.-Teile,
mindestens eines Füllstoffes enthält, der vorzugsweise an das Polymer gekoppelt ist, und

25 bis 0,01 Gew.-Teile, vorzugsweise
20 bis 1 Gew.-Teile,

eines Verarbeitungshilfs- und/oder Zusatzstoffes enthält.

**9.** Kunststoffolie, Kunststoffolienbahn oder daraus hergestellte Formteile nach einem oder mehreren der Ansprüche 1 bis 8, dadurch gekennzeichnet, daß die Mischung aus den Bestandteilen (a), (b) und (c) (berechnet auf 100 Gew.-Teile (a), (b) und (c)) zusätzlich

(d)    0,01 bis 50 Gew.-Teile, vorzugsweise
       0,1 bis 25 Gew.-Teile,

mindestens eines anorganischen Füllstoffes, vorzugsweise ausgewählt aus der Gruppe der Metalloxide, Metallcarbonate, Metalldioxide, Metallhydrate, Metallhydroxide, Hydrotalcite und/oder Silicate, Metallsulfate und vorzugsweise jedoch Calciumcarbonat, Zinkoxid, Magnesiumhydroxid, Aluminiumtrihydrat oder Siliciumdioxid, Talkum, Glimmer oder Wollastonit,

(e)    0,01 bis 5 Gew.-Teile, vorzugsweise
       0,1 bis 3 Gew.-Teile,

mindestens eines Stabilisators, Antioxidants und/oder UV-Absorbers,

(f)    0,01 bis 5 Gew.-Teile, vorzugsweise
       0,1 bis 3 Gew.-Teile,

mindestens eines Farbstoffes und/oder Farbpigmentes,

(g)    0 bis 3 Gew.-Teile, vorzugsweise
       0,01 bis 2 Gew.-Teile,

mindestens eines Gleitmittels und/oder Antistatikums

(h)    0 bis 30 Gew.-Teile, vorzugsweise
       1 bis 20 Gew.-Teile,

mindestens eines Flammschutzmittels

(i)    0 bis 12 Gew.-Teile, vorzugsweise
       0,1 bis 10 Gew.-Teile,

mindestens eines chemischen und/oder physikalischen Treibmittels enthält oder daraus besteht.

**10.** Kunststoffolie, Kunststoffolienbahn oder daraus hergestellte Formteile nach einem oder mehreren der Ansprüche 1 bis 9, dadurch gekennzeichnet, daß der Bestandteil (a) der Kunststoffmischung (bezogen auf 100 Gew.-Teile (a))

       bis zu 80 Gew.-%, vorzugsweise
       bis zu 35 Gew.-%,

durch ein Ethylen-Propylen-Random- oder Block-Copolymerisat mit einem Ethylengehalt von

       2 bis 10 Gew.-%, vorzugsweise
       2,5 bis 8 Gew.-%,

ersetzt ist.

**11.** Kunststoffolie, Kunststoffolienbahn oder daraus hergestelltes Formteil nach Anspruch 4, dadurch gekennzeichnet, daß die Lackschicht eine mittlere Schichtdicke von 0,5 bis 5,0 μm aufweist.

**12.** Tiefgezogene Formteile aus der Folienbahn nach den Ansprüchen 1 bis 11, dadurch gekennzeichnet, daß die Wanddickenverteilung, definiert als Variationskoeffizient der Wanddicke, der Mischung aus den Bestandteilen (a), (b) und (c) um mehr als 15 % besser ist als vom Bestandteil (a) alleine.

**13.** Verfahren zur Herstellung von Formteilen für Flugzeuge, Kraftfahrzeuge oder Kraftfahrzeuginnenverkleidungen unter Mitverwendung von ein- oder mehrschichtigen Kunststoffolien, die als Kunststoffanteil oder Kunststoffmischung

(a) 55 bis 95 Gew.-Teile

mindestens eines thermoplastischen Polyolefin-Elastomeren oder -Elastomergemisches und

(b) 45 bis 5 Gew.-Teile

mindestens eines anderen Olefin- bzw. Polyolefin und Styrol bzw. Polystyrol enthaltenden Block-, Diblock- oder Triblock- und/oder -Pfropfpolymerisates enthält, dadurch gekennzeichnet, daß das thermoplastische Polyolefin-Elastomere oder -Elastomergemisch (a) mindestens ein heterophasiges Ethylen-Polypropylen-Block-Copolymerisat, mit einem Ethylen-Propylen-Copolymerisatanteil von

       15 bis 50 Gew.-%

(bezogen auf 100 Gew.-Teile des Ethylen-Propylen-Blockpolymerisates) enthält und daß 44 bis 1 Gew.-Teile des Bestandteiles (b) durch die gleiche Gewichtsmenge eines Modifizierungsmittels (c) auf der Basis

eines Propylen-Maleinsäureanhydrid-Misch- oder -Pfropfpolymerisates,
eines Propylen-Acrylsäure-Misch- oder -Pfropfpolymerisates,
eines Ethylen-Vinylacetat-Copolymerisates,
eines Ethylen-Acrylsäure- bzw. Methacrylsäure-Copolymerisates,
eines Ethylen-Acrylester-Copolymerisates,
eines Ethylen-Glycidil-Methacrylat-Copolymerisates,
eines olefinischen Ionomeren,
eines Polyurethanes,
eines Polycaprolacetons,
eines Polyesterethers und/oder
eines Polyetheramids

ersetzt werden, daß diese Kunststoffolien oder Kunststoffolienbahnen auf eine Temperatur innerhalb des thermoplastischen Bereiches, des Fließbereiches oder des Schmelzpunktes oder Schmelzbereiches oder auf eine Temperatur über 100 °C, zumindest auf einer Flächenseite aufgeheizt und unter Mitverwendung eines Druckunterschiedes thermoverformt oder tiefgezogen werden.

14. Verwendung von ein- oder mehrschichtigen Kunststoffolien oder Kunststoffolienbahnen, die als Kunststoffanteil oder Kunststoffmischung
(a) 55 bis 95 Gew.-Teile
mindestens eines thermoplastischen Polyolefin-Elastomeren oder -Elastomergemisches und
(b) 45 bis 5 Gew.-Teile
mindestens eines anderen Olefin- bzw. Polyolefin und Styrol bzw. Polystyrol enthaltenden Block-, Diblock- oder Triblock- und/oder -Pfropfpolymerisates enthält, dadurch gekennzeichnet, daß das thermoplastische Polyolefin-Elastomere oder -Elastomergemisch (a) mindestens ein heterophasiges Polypropylen-Block-Copolymerisat, mit einem Ethylen-Propylen-Copolymerisatanteil von
    15 bis 50 Gew.-%
(bezogen auf 100 Gew.-Teile des Ethylen-Propylen-Blockpolymerisates) enthalten, wobei
    44 bis 1 Gew.-Teile
des Bestandteiles (b) durch die gleiche Gewichtsmenge eines Modifizierungsmittels (c) auf der Basis

eines Propylen-Maleinsäureanhydrid-Misch- oder -Pfropfpolymerisates,
eines Propylen-Acrylsäure-Misch- oder -Pfropfpolymerisates,
eines Ethylen-Vinylacetat-Copolymerisates,
eines Ethylen-Acrylsäure- bzw. Methacrylsäure-Copolymerisates,
eines Ethylen-Acrylester-Copolymerisates,
eines Ethylen-Glycidil-Methacrylat-Copolymerisates,
eines olefinischen Ionomeren,
eines Polyurethanes,
eines Polycaprolacetons,
eines Polyesterethers und/oder
eines Polyetheramids

ersetzt sind, zur Herstellung von Schalttafeln, Armaturenbrettern oder Säulen von Kraftfahrzeugen, Kraftfahrzeugseitenverkleidungen, Kraftfahrzeugtürverkleidungen oder Kraftfahrzeugablagen.

## Claims

1. A single- or multiple-layered plastic foil, plastic foil web or shaped part produced therefrom, which contains as plastic component or plastic mixture
(a) 55 to 95 parts by weight
at least of one thermoplastic polyolefin-elastomer or -elastomer- mixture and
(b) 45 to 5 parts by weight
at least of one other block- diblock- or triblock- and/or graft polymeride containing olefin- or polyolefin and styrene or polystyrene, characterised in that the thermoplastic polyolefin-elastomer or -elastomer- mixture (a) contains at least one heterophasic ethylene-polypropylene-block copolymeride with an ethylene-propylene-copolymeride component of

15 to 50 % by weight
(in relation to 100 parts by weight of the ethylene-propylene-block polymeride) and that 44 to 1 parts by weight of the component (b) are replaced by the same weight quantity of a modifying agent (c) on the basis of

a propylene-maleic acid anhydride mixed- or graft polymeride,
a propylene-acrylic acid mixed- or graft polymeride,
an ethylene-vinyl acetate copolymeride,
an ethylene-acrylic acid or methacrylic acid copolymeride,
an ethylene-acrylic ester copolymeride,
an ethylene-glycidil-methacrylate copolymeride,
an olefin ionomer,
a polyurethane,
a polycaprolacetone,
a polyester ether and/or
a polyether amide.

2. A plastic foil, plastic foil web or shaped parts produced therefrom according to Claim 1, characterised in that the thermoplastic polyolefin-elastomer or -elastomer mixture (a) consists of at least one heterophasic ethylene-propylene-block copolymeride with an ethylene-propylene-copolymeride component of

15 to 50 % by weight, preferably
20 to 45 % by weight,

(in relation to 100 parts by weight of the ethylene-propylene-block polymeride), in which the ethylene component of the copolymeride amounts to 20 to 90 % by weight and the melting index (MFI 230/2.16) amounts to 0.2 to 5 gr/10 min.

3. A plastic foil, plastic foil web or shaped parts produced therefrom according to Claims 1 or 2, characterised in that the plastic foil, the plastic foil web, the shaped part produced therefrom or the layer of a composite foil contains as plastic component or plastic mixture the components (a) and (b) and has a Shore D hardness of 30 to 60, preferably 35 to 55, and a 2% traction E modulus of

30 to 400 MPa, preferably
50 to 300 MPa.

4. A plastic foil, plastic foil web or shaped parts produced therefrom according to one or more of Claims 1 to 3, characterised in that at least on one surface of the plastic foil, plastic foil web, of the shaped part produced therefrom or a layer of a composite foil, containing the components (a) and (b), directly or over an intermediate layer, primer layer or printed layer a lacquer layer, a transparent surface layer or a transparent surface foil with a layer of thickness of 0.2 to 30 μm is arranged.

5. A plastic foil, plastic foil web or shaped parts produced therefrom according to one or more of Claims 1 to 4, characterised in that the heterophasic polyolefin-elastomer or -polymer mixture (a) contains no reactive groups bonded to the plastic or contains a proportion of reactive groups of less than 0.5 % by weight, preferably less than 0.4 % by weight (in relation to 100 parts by weight (a)).

6. A plastic foil, plastic foil web or shaped parts produced therefrom according to one or more of Claims 1 to 5, characterised in that
43 to 3 parts by weight
of the component (b) are replaced by the same weight quantity of a modifying agent (c) on the basis of

a propylene-maleic acid anhydride mixed- or graft polymeride,
a propylene-acrylic acid mixed- or graft polymeride,
an ethylene-vinyl acetate copolymeride,
an ethylene-acrylic acid- or methacrylic acid copolymeride,
an ethylene-acrylic ester copolymeride,
an ethylene-glycidil-methacrylate copolymeride,
an olefin ionomer,

a polyurethane,
a polycaprolacetone,
a polyester ether and/or
a polyether amide.

**7.** A plastic foil, plastic foil web or shaped parts produced therefrom according to one or more of Claims 1 to 6, characterised in that the component (b) contains reactive groups.

**8.** A plastic foil, plastic foil web or shaped parts produced therefrom according to one or more of Claims 1 to 7, characterised in that the mixture of the components (a), (b) and (c) (calculated on 100 parts by weight (a) and (b) or (a), (b) and (c) additionally contains
(d)    0.01 to 50 parts by weight, preferably
         0.1 to 25 parts by weight
at least of one filler, which is preferably coupled to the polymer, and

         25 to 0.01 parts by weight, preferably
         20 to 1 parts by weight

of a processing adjuvant- and/or additive substance.

**9.** A plastic foil, plastic foil web or shaped parts produced therefrom according to one or more of Claims 1 to 8, characterised in that the mixture of the components (a), (b) and (c) (calculated on 100 parts by weight (a), (b) and (c)) additionally contains or consists of
(d)    0.01 to 50 parts by weight, preferably
         0.1 to 25 parts by weight
at least of one inorganic filler, preferably selected from the group of metal oxides, metal carbonates, metal dioxides, metal hydrates, metal hydroxides, hydrotalcites and/or silicates, metal sulphates and preferably, however, calcium carbonate, zinc oxide, magnesium hydroxide, aluminium trihydrate or silicon dioxide, talcum, mica or wollastonite,
(e)    0.01 to 5 parts by weight, preferably
         0.1 to 3 parts by weight
at least of one stabiliser, antioxidant and/or UV absorber,
(f)    0.01 to 5 parts by weight, preferably
         0.1 to 3 parts by weight
at least of one dye and/or colour pigment,
(g)    0 to 3 parts by weight, preferably
         0.01 to 2 parts by weight
at least of one lubricant and/or antistatic
(h)    0 to 30 parts by weight, preferably
         1 to 20 parts by weight
at least of one fireproofing agent
(i)    0 to 12 parts by weight, preferably
         0.1 to 10 parts by weight
at least of one chemical and/or physical propellant.

**10.** A plastic foil, plastic foil web or shaped parts produced therefrom according to one or more of Claims 1 to 9, characterised in that the component (a) of the plastic mixture (in relation to 100 parts by weight (a)) is replaced

         up to 80 % by weight, preferably
         up to 35 % by weight

by an ethylene-propylene-random- or block copolymeride with an ethylene content of

         2 to 10 % by weight, preferably
         2.5 to 8 % by weight.

**11.** A plastic foil, plastic foil web or shaped part produced therefrom according to Claim 4, characterised in that the lacquer layer has a mean layer thickness of 0.5 to 5.0 $\mu$m.

12. Deep-drawn shaped parts from the foil web according to Claims 1 to 11, characterised in that the wall thickness distribution, defined as variation coefficient of the wall thickness, of the mixture of the components (a), (b) and (c) is better by more than 15 % than of component (a) alone.

13. A method for the production of shaped parts for aircraft, motor vehicles or inner linings of motor vehicles with the co-use of single- or multiple-layered plastic foils, which contain as plastic component or plastic mixture
(a) 55 to 95 parts by weight
at least of one thermoplastic polyolefin-elastomer or -elastomer- mixture and
(b) 45 to 5 parts by weight
at least of one other block-, diblock- or triblock- and/or graft polymeride containing olefin or polyolefin and styrene or polystyrene, characterised in that the thermoplastic polyolefin elastomer or -elastomer mixture (a) contains at least one heterophasic ethylene-polypropylene-block copolymeride, with an ethylene-propylene-copolymeride component of
    15 to 50 % by weight
(in relation to 100 parts by weight of the ethylene-propylene-block polymeride) and that 44 to 1 parts by weight of the component (b) are replaced by the same weight quantity of a modifying agent (c) on the basis of

    a propylene-maleic acid anhydride mixed- or graft polymeride,
    a propylene-acrylic acid mixed- or graft polymeride,
    an ethylene-vinyl acetate copolymeride,
    an ethylene-acrylic acid- or methacrylic acid copolymeride,
    an ethylene-acrylic ester copolymeride,
    an ethylene-glycidil-methacrylate copolymeride,
    an olefin ionomer,
    a polyurethane,
    a polycaprolacetone,
    a polyester ether and/or
    a polyether amide,

that these plastic foils or plastic foil webs are heated to a temperature within the thermoplastic range, the plastic range or the melting point or melting range or to a temperature over 100°C, at least on one surface side and with the co-use of a pressure difference are thermo-deformed or deep-drawn.

14. The use of single- or multiple-layered plastic foils or plastic foil webs which contain as plastic component or plastic mixture
(a) 55 to 95 parts by weight
at least of one thermoplastic polyolefin-elastomer or -elastomer- mixture and
(b) 45 to 5 parts by weight
at least of one other block-, diblock- or triblock- and/or -graft polymeride containing olefin- or polyolefin and styrene or polystyrene, characterised in that the thermoplastic polyolefin-elastomer or -elastomer mixture (a) contains at least one heterophasic polypropylene-block copolymeride with an ethylene-propylene copolymeride component of
    15 to 50 % by weight
(in relation to 100 parts by weight of the ethylene-propylene block polymeride), in which
    44 to 1 parts by weight
of the component (d) are replaced by the same weight quantity of a modifier (c) on the basis of

    a propylene-maleic acid anhydride mixed- or graft polymeride,
    a propylene-acrylic acid mixed- or graft polymeride,
    an ethylene-vinyl acetate -copolymeride,
    an ethylene-acrylic acid- or methacrylic acid copolymeride,
    an ethylene-acrylic- ester copolymeride,
    an ethylene-glycidil-methacrylate-copolymeride,
    an olefin ionomer,
    a polyurethane,
    a polycaprolacetone,
    a polyester ether and/or
    a polyether amide,

for the production of switch panels, dashboards or columns of motor vehicles, motor vehicle side linings, motor vehicle door linings or motor vehicle shelves.

**Revendications**

1. Feuille en matière plastique, bande en matière plastique mono- ou multicouche, ou pièce moulée fabriquée à partir de celle-ci, qui contient à titre de fraction de matière plastique ou de mélange de matières plastiques
   (a) 55 à 95 parts en poids
   d'au moins un élastomère ou mélange d'élastomères polyoléfinique(s) thermoplastique(s) et
   (b) 45 à 5 parts en poids
   d'au moins un autre polymère séquencé, diséquencé ou triséquencé et/ou greffé contenant une oléfine ou polyoléfine et du styrène ou polystyrène, caractérisée(s) en ce que l'élastomère ou le mélange d'élastomères polyoléfinique(s) thermoplastique(s) (a) contient au moins un copolymère séquencé hétérophasique d'éthylène-polypropylène avec une fraction de copolymère d'éthylène-propylène de
   
   15 à 50 % en poids
   (par rapport à 100 parts en poids du polymère séquencé d'éthylène-propylène) et en ce que 44 à 1 parts en poids du constituant (b) sont remplacées par la même quantité massique d'un agent de modification (c) à base

   d'un polymère greffé ou copolymère de propylène-anhydride maléique,
   d'un polymère greffé ou copolymère de propylène-acide acrylique,
   d'un copolymère d'éthylène-acétate de vinyle,
   d'un copolymère d'éthylène - acide acrylique ou méthacrylique,
   d'un copolymère d'éthylène-ester acrylique,
   d'un copolymère d'éthylène-méthacrylate glycidylique,
   d'un ionomère oléfinique,
   d'un polyuréthane,
   d'un polycaprolactone,
   d'un polyesteréther et/ou
   d'un polyétheramide.

2. Feuille en matière plastique, bande en matière plastique ou pièces moulées fabriquées à partir de celle-ci, selon la revendication 1, caractérisée(s) en ce que l'élastomère ou le mélange d'élastomères polyoléfinique(s) thermoplastique(s) (a) est constitué d'au moins un copolymère séquencé hétérophasique d'éthylène-propylène avec une fraction de copolymère d'éthylène-propylène de
   
   15 à 50 % en poids, de préférence
   20 à 45 % en poids,
   
   (par rapport à 100 parts en poids du polymère séquencé d'éthylène-propylène), la fraction d'éthylène du copolymère s'élevant à 20 à 90 % en poids et l'indice de fusion (MFI 230/2,16) à 0,2 à 5 g/10 min.

3. Feuille en matière plastique, bande en matière plastique ou pièces moulées fabriquées à partir de celle-ci, selon les revendications 1 et 2, caractérisée(s) en ce que la feuille ou bande en matière plastique, la pièce moulée fabriquée à partir de celle-ci ou la couche d'une feuille composite contient à titre de fraction de matière plastique ou de mélange de matière plastique les constituants (a) et (b) et en ce qu'elle présente une dureté Shore-D de 30 à 60, de préférence de 35 à 55, et un module d'élasticité à la traction à 2 % de
   
   30 à 400 MPa, de préférence
   50 à 300 MPa.

4. Feuille en matière plastique, bande en matière plastique ou pièces moulées fabriquées à partir de celle-ci selon une ou plusieurs des revendications 1 à 3, caractérisée(s) en ce qu'au moins sur une surface de la feuille en matière plastique ou bande en matière plastique, de la pièce moulée fabriquée à partir de celle-ci ou d'une couche d'une feuille composite, contenant les constituants (a) et (b), est disposée immédiatement ou par l'intermédiaire d'une couche intercalée, d'une couche de fond ou d'une couche d'impression, une couche de laque, une couche superficielle transparente ou une feuille superficielle transparente avec une épaisseur de couche de 0,2 à 30 µm.

**5.** Feuille en matière plastique, bande en matière plastique ou pièces moulées fabriquées à partir de celle-ci selon une ou plusieurs des revendications 1 à 4, caractérisée(s) en ce que l'élastomère ou le mélange de polymères polyoléfinique(s) hétérophasique(s) (a) ne contient pas de groupes réactionnels liés à la matière plastique ou une fraction de groupes réactionnels inférieure à 0,5 % en poids, de préférence inférieure à 0,4 % en poids (par rapport à 100 parts en poids de (a)).

**6.** Feuille en matière plastique, bande en matière plastique ou pièces moulées fabriquées à partir de celle-ci selon une ou plusieurs des revendications 1 à 5, caractérisée(s) en ce que

      43 à 3 parts en poids

du constituant (b) sont remplacées par la même quantité massique d'un agent de modification (c) à base

      d'un polymère greffé ou copolymère de propylène-anhydride maléique,
      d'un polymère greffé ou copolymère de propylène-acide acrylique,
      d'un copolymère d'éthylène-acétate de vinyle,
      d'un copolymère d'éthylène - acide acrylique ou méthacrylique,
      d'un copolymère d'éthylène-ester acrylique,
      d'un copolymère d'éthylène-méthacrylate glycidylique,
      d'un ionomère oléfinique,
      d'un polyuréthane,
      d'un polycaprolactone,
      d'un polyesteréther et/ou
      d'un polyétheramide.

**7.** Feuille en matière plastique, bande en matière plastique ou pièces moulées fabriquées à partir de celle-ci selon une ou plusieurs des revendications 1 à 6, caractérisée(s) en ce que le constituant (b) contient des groupes réactionnels.

**8.** Feuille en matière plastique, bande en matière plastique ou pièces moulées fabriquées à partir de celle-ci selon une ou plusieurs des revendications 1 à 7, caractérisée(s) en ce que le mélange constitué des constituants (a), (b) et (c) (calculé par rapport à 100 parts en poids de (a) et (b) ou de (a), (b) et (c)) contient en outre
(d)    0,01 à 50 parts en poids, de préférence
      0,1 à 25 parts en poids,
d'au moins un agent de charge, qui est couplé de préférence au polymère, et

      25 à 0,001 parts en poids, de préférence
      20 à 1 parts en poids,

d'un adjuvant ou additif de mise en oeuvre.

**9.** Feuille en matière plastique, bande en matière plastique ou pièces moulées fabriquées à partir de celle-ci selon une ou plusieurs des revendications 1 à 8, caractérisée(s) en ce que le mélange constitué des constituants (a), (b) et (c) (calculé par rapport à 100 parts en poids de (a), (b) et (c)) contient en outre
(d)    0,01 à 50 parts en poids, de préférence
      0,1 à 25 parts en poids,
d'au moins un agent de charge inorganique, choisi de préférence dans le groupe des oxydes métalliques, des carbonates métalliques, des dioxydes métalliques, des hydrates métalliques, des hydroxydes métalliques, des hydrotalcites et/ou des silicates, des sulfates métalliques et de préférence cependant du carbonate de calcium, de l'oxyde de zinc, de l'hydroxyde de magnésium, du trihydrate d'aluminium ou du dioxyde de silicium, du talc, du mica ou de la wollastonite,
(e)    0,01 à 5 parts en poids, de préférence
      0,1 à 3 parts en poids,
d'au moins un stabilisateur, d'un agent antioxydant et/ou d'un absorbeur d'U.V.,
(f)    0,01 à 5 parts en poids, de préférence
      0,1 à 3 parts en poids,
d'au moins un colorant et/ou piment coloré,
(g)    0 à 3 parts en poids, de préférence
      0,01 à 2 parts en poids,
d'au moins un agent lubrifiant et/ou agent antistatique,

(h)    0 à 30 parts en poids, de préférence

      1 à 20 parts en poids,

d'au moins un agent ignifuge,

(i)    0 à 12 parts en poids, de préférence

      0,1 à 10 parts en poids,

d'au moins un agent d'expansion chimique et/ou physique, ou en est constitué.

10. Feuille en matière plastique, bande en matière plastique ou pièces moulées fabriquées à partir de celle-ci selon une ou plusieurs des revendications 1 à 9, caractérisée(s) en ce que le constituant (a) du mélange de matière plastique est remplacé (par rapport à 100 parts en poids de (a))

    jusqu'à 80 % en poids, de préférence

    jusqu'à 35 % en poids,

par un copolymère aléatoire ou séquencé d'éthylène-propylène avec une teneur en éthylène de

    2 à 10 % en poids, de préférence

    2,5 à 8 % en poids.

11. Feuille en matière plastique, bande en matière plastique ou pièce moulée fabriquée à partir de celle-ci, selon la revendication 4, caractérisée en ce que la couche de laque présente une épaisseur moyenne de 0,5 à 5,0 μm.

12. Pièce moulée emboutie à partir de la bande de feuille, selon les revendications 1 à 11, caractérisée en ce que la distribution des épaisseurs de paroi, définie sous forme du coefficient de variation de l'épaisseur de paroi, du mélange des constituants (a), (b) et (c) est supérieure de plus de 15 % à celle du constituant (a) seul.

13. Procédé de fabrication de pièces moulées pour avions, véhicules automobiles ou garnitures intérieures de véhicules automobiles par l'utilisation conjointe de feuilles en matière plastique mono- ou multicouches, qui contiennent à titre de fraction de matière plastique ou de mélange de matières plastiques

(a) 55 à 95 parts en poids

d'au moins un élastomère ou mélange d'élastomères polyoléfinique(s) thermoplastique(s) et

(b) 45 à 5 parts en poids

d'au moins un autre polymère séquencé, diséquencé ou triséquencé et/ou greffé contenant une oléfine ou polyoléfine et du styrène ou polystyrène, caractérisé en ce que l'élastomère ou le mélange d'élastomères polyoléfinique (s) thermoplastique(s) (a) contient au moins un copolymère séquencé hétérophasique d'éthylène-polypropylène avec une fraction de copolymere d'éthylène-propylène de

    15 à 50 % en poids

(par rapport à 100 parts en poids du polymère séquencé d'éthylène-propylène) et en ce que 44 à 1 parts en poids du constituant (b) sont remplacées par la même quantité massique d'un agent de modification (c) à base

    d'un polymère greffé ou copolymère de propylène-anhydride maléique,

    d'un polymère greffé ou copolymère de propylène-acide acrylique,

    d'un copolymère d'éthylène-acétate de vinyle,

    d'un copolymère d'éthylène - acide acrylique ou méthacrylique,

    d'un copolymère d'éthylène-ester acrylique,

    d'un copolymère d'éthylène-méthacrylate glycidylique,

    d'un ionomère oléfinique,

    d'un polyuréthane,

    d'un polycaprolactone,

    d'un polyesteréther et/ou

    d'un polyétheramide,

en ce que ces feuilles en matière plastique ou bandes en matière plastique sont chauffées, au moins sur une face, à une température à l'intérieur de la gamme thermoplastique, de la gamme de liquéfaction ou du point de fusion, ou de la gamme de fusion ou à une température supérieure à 100 °C, et thermoformées ou embouties par l'utilisation conjointe d'une différence de pression.

14. Utilisation de feuilles en matière plastique ou de bandes en matière plastique mono- ou multicouches, qui contiennent à titre de fraction de matière plastique ou de mélange de matières plastiques

(a) 55 à 95 parts en poids

d'au moins un élastomère ou mélange d'élastomères polyoléfinique(s) thermoplastique(s) et

(b) 45 à 5 parts en poids

d'au moins un autre polymère séquencé, diséquencé ou triséquencé et/ou greffé contenant une oléfine ou polyoléfine et du styrène ou polystyrène, caractérisée en ce que l'élastomère ou le mélange d'élastomères polyoléfinique(s) thermoplastique(s) (a) contient au moins un copolymère séquencé hétérophasique de polypropylène avec une fraction de copolymère d'éthylène-propylène de

15 à 50 % en poids

(par rapport à 100 parts en poids du polymère séquencé d'éthylène-propylène),

44 à 1 parts en poids

du constituant (b) étant remplacées par la même quantité massique d'un agent de modification (c) à base

d'un polymère greffé ou copolymère de propylène-anhydride maléique,

d'un polymère greffé ou copolymère de propylène-acide acrylique,

d'un copolymère d'éthylène-acétate de vinyle,

d'un copolymère d'éthylène - acide acrylique ou méthacrylique,

d'un copolymère d'éthylène-ester acrylique,

d'un copolymère d'éthylène-méthacrylate glycidylique,

d'un ionomère oléfinique,

d'un polyuréthane,

d'un polycaprolactone,

d'un polyesteréther et/ou

d'un polyétheramide,

pour la fabrication de tableaux de commande, de tableaux de bord ou de montants de véhicules automobiles, de parois latérales de véhicules automobiles, de garnitures de portières de véhicules automobiles ou de vide-poches de véhicules automobiles.